# EUROPEAN PATENT APPLICATION

(11) **EP 1 971 165 A1**
(43) Date of publication of application: **17.09.2008**
(21) Application number: 06843068.5
(22) Date of filing: 22.12.2006
(51) Int. Cl.: H04Q 7/36, H04J 3/00

(54) **MOBILE COMMUNICATION SYSTEM AND BASE STATION DEVICE**

(30) Priority: 27.12.2005 JP 2005374796
(71) Applicant: Kyocera Corporation, Kyoto-shi, Kyoto-fu 612-8501 (JP)
(72) Inventor: KITAHARA, Minako, Yokohama-shi, Kanagawa 2248502 (JP); KASHIWASE, Susumu, Yokohama-shi, Kanagawa 2248502 (JP)
(74) Representative: Winter, Brandl, Fürniss, Hübner Röss, Kaiser, Polte Partnerschaft Patent- und Rechtsanwaltskanzlei
(86) International application number: PCT/JP2006/325611
(87) International publication number: WO 2007/077762

(57) **Abstract**

In a base station device (30) for performing wireless communications with a plurality of mobile station devices (20) by using a frame that includes a plurality of uplink time slots and a plurality of downlink time slots that correspond to these uplink time slots, the base station device includes a time slot assignment part (37) for assigning to respective channels a time slot set constructed from uplink time slots and downlink time slots within a frame; and a part (39) for specifying, among the one or more channels to which a time slot set has been assigned by the time slot assignment part (37), channels that do not use uplink time slots whereby a channel that does not use an uplink time slot is specified. The time slot assignment part (37) assigns an uplink time slot assigned to the channel specified by the part (39) for specifying channels that do not use uplink time slots to a channel other than the specified channel.

## Description

### TECHNICAL FIELD

The present invention relates to a mobile communication system and a base station device, and more particularly relates to a technique for the effective utilization of time slots.

### BACKGROUND ART

In mobile communication systems utilizing a TDMA/TDD system, each frame contains a predetermined number of uplink time slots and the same number of downlink time slots. The uplink time slots and downlink time slots form pairs, and pairs of time slots (hereafter referred to as time slot sets) are assigned to communication channels used to perform communications by the individual mobile station devices. The reason for this is that the mobile communication devices perform two-way communications.

In the abovementioned mobile communication system, since the time slot sets are assigned to the respective communication channels, the uplink time slots are not effectively utilized in cases where there are numerous downlink communications and almost no uplink communications.

For example, since broadcast channels that transmit pilot signals and the like are exclusively downlink channels, the uplink time slots of the time slot sets assigned to the broadcast channels are not at all used in communications.

In this regard, according to the technique described in patent document 1, the respective time slots are not divided beforehand into uplink time slots and downlink time slots; instead, the use of the respective time slots as uplink time slots or downlink time slots is appropriately determined in accordance with the communications conditions. It is accordingly possible to devise the system so that the ratio of uplink time slots to downlink time slots can be freely varied as necessary, thereby yielding an effective utilization of the time slots.
[Patent Document 1] Japanese Laid-Open Patent Application No. 2003-152622

### DISCLOSURE OF THE INVENTION

### Problems to be Solved by the Invention

In TDD systems, guard time, which is the time required for switching between transmission and reception, must be inserted between the uplink time slots and downlink time slots. Accordingly, in the communication system described in patent document 1, a guard time (GAP) is inserted between all of the time slots so that the respective time slots can be used as either uplink time slots or downlink time slots (see paragraph 0056 in patent document 1).

However, in the communication system described in patent document 1, guard times are also inserted between continuous uplink time slots and continuous downlink time slots which have no switching between transmission and reception; accordingly, the time during which communication data cannot be transmitted or received is longer than that of the conventional TDMA/TDD system.

Accordingly, it is one object of the present invention to provide a mobile communication system and a base station device for allowing time slots to be effectively utilized without increasing the guard time.

### Means for Solving the Problem

In order to solve the abovementioned problems, a mobile communication system according to the present invention is a mobile communication system for performing wireless communication between a base station device and a plurality of mobile station devices by using a frame that includes a plurality of uplink time slots and a plurality of downlink time slots that correspond to these uplink time slots, wherein: the base station device has time slot set assignment means for assigning, to respective channels, a time slot set constructed from the uplink time slot and the downlink time slot within the frame; each of the mobile station devices has uplink data transmission means for transmitting uplink data by using the uplink time slot assigned to the channel used by the mobile station device; the base station device further has means for specifying, among the one or plurality of channels to which a time slot set has been assigned by the time slot set assignment means, channels that do not use uplink time slots whereby a channel that does not use an uplink time slot is specified; and uplink time slot assigning means whereby the uplink time slot assigned to the channel specified by the means for specifying channels that do not use uplink time slots is assigned to a channel other than the specified channel; and in a case where the uplink time slot is assigned by the uplink time slot assigning means to the channel used by the mobile station device, the uplink data transmission means of the mobile station device transmits uplink data by using the time slot assigned by the uplink time slot assigning means together with the uplink time slot assigned by the time slot set assignment means.

In this way, since there is no alteration of the uplink-downlink status of the respective time slots, the time slots can be effectively utilized without increasing the guard time.

According to the mobile communication system, furthermore, the base station device may further have storage means for correlating and storing the channel to which the uplink time slot have been assigned by the uplink time slot assigning means, and the uplink time slot; and uplink data receiving means for receiving, via the channel stored in correlation with the uplink time slot in the storage means, data transmitted in the uplink time slot by the uplink data transmission means of the mobile station device.

In this way, since the uplink time slot and the channel is stored in association with each other, uplink communication can be performed in each time slot.

According to the mobile communication system, furthermore, the base station device may further have notification means whereby notification of the uplink time slot assigned to a designated channel by the uplink time slot assigning means is provided to the mobile station device that performs communication using the channel, over a broadcast channel.

In this way, the mobile station device can receive the assignment of a new time slot via the broadcast channel.

According to the mobile communication system, furthermore, the channel specified by the means for specifying channels that do not use uplink time slots may be a broadcast channel.

In this way, an uplink time slot assigned to a broadcast channel can be used in another channel.

According to the mobile communication system, furthermore, the channel specified by the means for specifying channels that do not use uplink time slots is a control channel; the uplink time slot assigning means assigns the uplink time slot that has been assigned to the control channel specified by the means for specifying channels that do not use uplink time slots to a channel other than the control channel; and once a connection request has been sent to the base station device by the mobile station device via the control channel, the uplink data transmission means of the mobile station device may transmit uplink data by additionally using the uplink time slot assigned to the control channel by the uplink time slot assigning means.

In this way, an uplink time slot assigned to a control channel can also be continuously used after a connection request has been made.

Furthermore, a base station device according to the present invention is a base station device used in a mobile communication system for performing wireless communication between the base station device and a plurality of mobile station devices by using a frame that includes a plurality of uplink time slots and a plurality of downlink time slots that correspond to these uplink time slots, having: time slot set assignment means for assigning, to respective channels, a time slot set constructed from the uplink time slot and the downlink time slot within the frame; means for specifying, among the one or plurality of channels to which a time slot set has been assigned by the time slot set assignment means, channels that do not use uplink time slots whereby a channel that does not use an uplink time slot is specified; and uplink time slot assigning means whereby the uplink time slot assigned to the channel specified by the means for specifying channels that do not use uplink time slots is assigned to a channel other than the specified channel.

### BRIEF DESCRIPTION OF THE DRAWINGS

FIG. 1 is a system construction diagram of a mobile communication system according to an embodiment of the present invention;
FIG. 2 is a diagram of a frame format according to an embodiment of the present invention;
FIG. 3 is a functional block diagram of a base station device and a mobile station device according to an embodiment of the present invention;
FIG. 4 is a diagram showing an example of a channel/time slot correspondence table according to an embodiment of the present invention;
FIG. 5 a diagram showing a channel/time slot correspondence table according to an embodiment of the present invention;
FIG. 6 is a explanatory diagram of an uplink time slot assignment and notification process according to an embodiment of the present invention;
FIG. 7 is a flowchart showing a process of the base station device according to an embodiment of the present invention; and
FIG. 8 is a flowchart showing a process of the mobile station device according to an embodiment of the present invention.

### BEST MODE FOR CARRYING OUT THE INVENTION

Embodiments of the present invention will be described below with reference to the drawings.

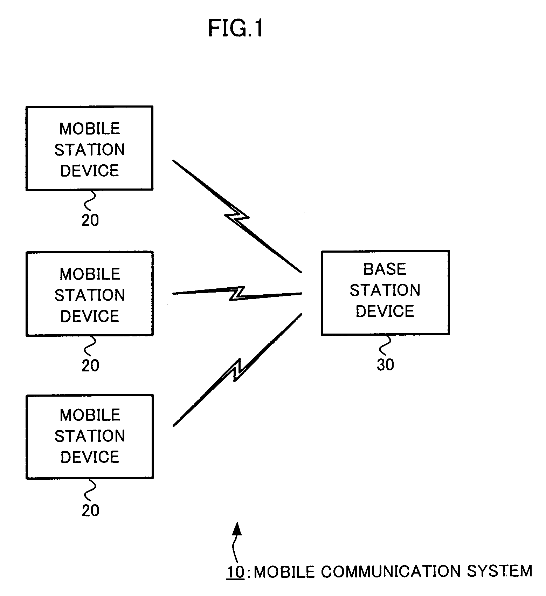

FIG. 1 is a system construction diagram of a mobile communication system 10 according to the present embodiment. As shown in this diagram, the mobile communication system 10 includes a plurality of mobile station devices 20 and a base station device 30.

The respective mobile station devices 20 and the base station device 30 are all computers equipped with a CPU, memory, and wireless communication function. The memories store programs and data required for the execution of these programs. The CPUs operate in accordance with the programs stored in the memories, and read out and write the data if necessary.

As a result of the wireless communication function, the respective mobile station devices 20 and base station device 30 perform communications according to a TDMA/TDD system. TDMA is an abbreviation for time division multiple access, and TDD is an abbreviation for time division duplex.

In the present embodiment, two types of communications are performed: namely, two-way communication between the base station device 30 and the respective mobile station devices 20, and one-way communication from the base station device 30 to the respective mobile station devices 20. In such communications, channels are set, and data is transmitted and received via each of these channels. Below, channels used for two-way communications in which user data is transmitted and received will be called communication channels, and channels used for two-way communications in which communication control data is transmitted and received will be called control channels. Channels for one-way communications will be called broadcast channels. Communication channels are set for each mobile station device 20 at the beginning of communications, while control channels and broadcast channels are set in advance as channels that are shared by the respective mobile station devices 20.

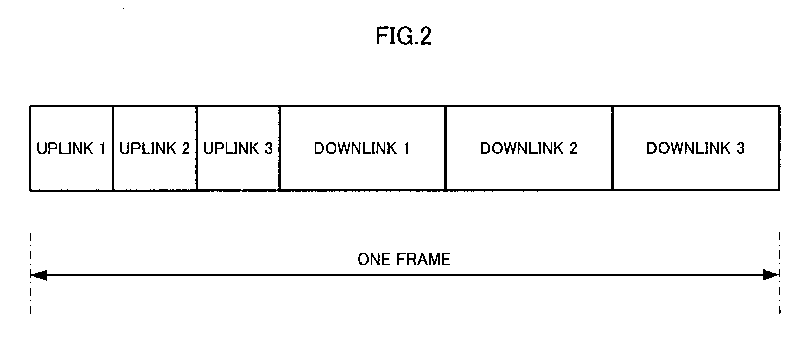

FIG. 2 is a diagram of a frame format used in communications between the respective mobile station devices 20 and the base station device 30. As shown in this diagram, a plurality of continuous uplink time slots (here, three time slots) and the same number of continuous downlink time slots are included in a single frame. Thus, TDD is achieved by dividing each frame into a plurality of time slots, and partitioning these time slots into uplink time slots and downlink time slots.

Time slots and frequencies for transmitting and receiving data are assigned to the respective channels mentioned above. In concrete terms, as a rule, a time slot sets constructed from a pair of uplink and downlink time slots within a frame (for example, the uplink time slot 1 and downlink time slot 1 in FIG. 2 form a single time slot set) is assigned to each channel.

However, specified time slot sets (for example, the time slot set constructed from the uplink time slot 1 and downlink time slot 1) are respectively assigned to control channels at the rate of 1 frame per 20 frames, and to communication channels at the rate of 19 frames per 20 frames.

In the present embodiment, the base station 30 specifies channels that do not use uplink time slots (hereafter referred to as channels that do not use uplink time slots) among the one or more channels to which time slot sets have thus been assigned. For example, since broadcast channels are downlink-only one-way communications, the channels do not use uplink time slots. Accordingly, the base station device 30 can specify broadcast channels as channels that do not use uplink time slots. Below, the function of the mobile communication system 10 will be described in detail using an example in which broadcast channels are specified as channels that do not use uplink time slots.

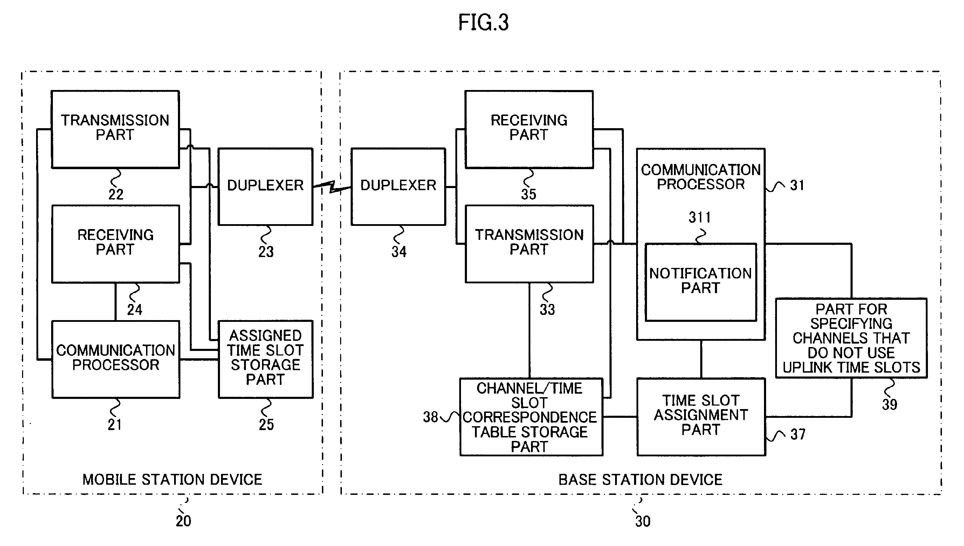

FIG. 3 is a functional block diagram of the mobile station device 20 and base station device 30. As shown in this diagram, the mobile station device 20 includes a communication processor 21, a transmission part 22, a duplexer 23, a receiving part 24, and an assigned time slot storage part 25. Furthermore, the base station device 30 includes a communication processor 31, a transmission part 33, a duplexer 34, a receiving part 35, a time slot assignment part 37, a channel/time slot correspondence table storage part 38, and a part 39 for specifying channels that do not use uplink time slots; and the communication processor 31 further contains a notification part 311.

The communication processor 21 produces uplink data (data transmitted to the base station device 30 by the mobile station devices 20), and outputs this data to the transmission part 22 in correspondence with the channel in accordance with the type of this uplink data. For example, in cases where the mobile station device 20 initiates communication with the base station device 30, the communication processor 21 produces uplink communication control data including a request to initiate communication, and outputs the data to the transmission part 22 in correspondence with the control channel.

The assigned time slot storage part 25 stores the channels and the time slots assigned to these channels in association with each other.

The transmission part 22 transmits the uplink data output from the communication processor 21 using the time slots stored in the assigned time slot storage part 25 in correspondence with the channels associated with the uplink data.

The duplexer 23 switches the connection between an antenna (not shown) and the transmission part 22 and receiving part 24 at the times assigned to the uplink and the times assigned to the downlink. In concrete terms, the antenna and the transmission part 22 are connected during the time assigned to the uplink, and the antenna and receiving part 24 are connected during the time assigned to the downlink. As a result, the uplink data transmitted by the transmission part 22 is transmitted in a wireless manner to the base station device 30, and the downlink data transmitted in a wireless manner by the base station device 30 (the data transmitted to the mobile station devices 20 by the base station device 30) is input into the receiving part 24.

Like the duplexer 23, the duplexer 34 switches the connections between the antenna (no shown) and the transmission part 33 and receiving part 35 at the times assigned to the uplink and the times assigned to the downlink. In concrete terms, the antenna and the receiving part 35 are connected during the time assigned to the uplink, and the antenna and the transmission part 33 are connected during the time assigned to the downlink. As a result, the downlink data transmitted by the transmission part 33 is transmitted in a wireless manner to the mobile station devices 20, and the uplink data transmitted in a wireless manner by the mobile station devices 20 is input into the receiving part 35.

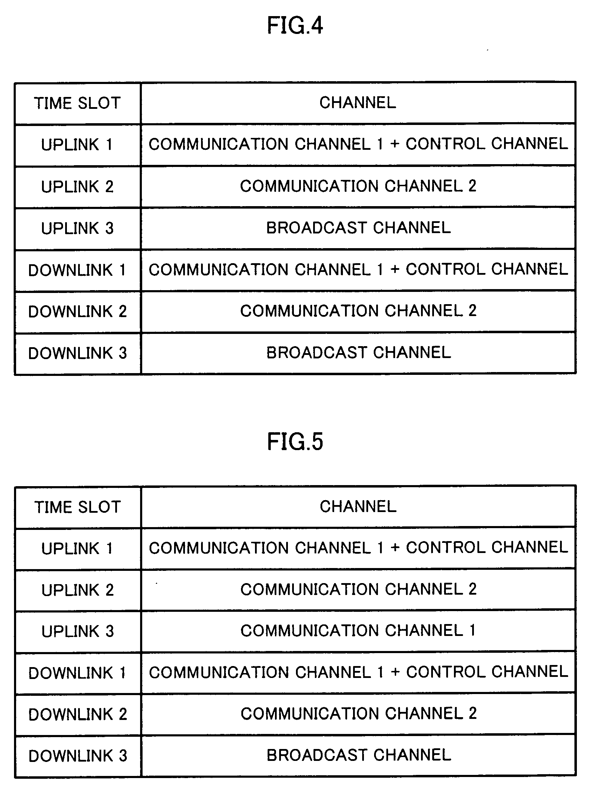

The channel/time slot correspondence table will be described below. The channel/time slot correspondence table is stored in the channel/time slot correspondence table storage part 38, and is a table that stores time slots, communication channels assigned to these time slots by the time slot assignment part 37 described later, control channels, or broadcast channels in association with each other. FIG. 4 is a diagram showing an example of this channel/time slot correspondence table. The assignment of the respective time slots shown in FIG. 2 to a communication channel 1, communication channel 2, broadcast channel, or control channel is stored in the channel/time slot correspondence table shown in FIG. 4. Furthermore, in FIG. 4, a time slot set constructed from the uplink time slot 1 and downlink time slot 1 is assigned to the communication channel 1 and control channel. This indicates that the same time slot set as those of the communication channel is assigned to the control channel at the rate of 1 frame per 20 frames as described above.

The receiving part 35 receives uplink data transmitted by the transmission part 22 in an uplink time slot over the channel stored in correspondence with the uplink time slot in the channel/time slot correspondence table. In concrete terms, the receiving part 35 acquires a channel stored in correspondence with a time slot containing uplink data received from the channel/time slot correspondence table, and outputs the received uplink data to the communication processor 31 in correspondence with the acquired channel.

The communication processor 31 performs a communication process in accordance with the channel and uplink data input from the receiving part 35. For example, in cases where a communication initiation request is contained in the uplink data associated with the control channel (uplink communication control data), the communication processor 31 instructs the time slot assignment part 37 to assign a time slot set to the communication channel of the mobile station devices 20 that transmitted the communication initiation request.

In cases where an instruction is made for a time slot set to be assigned to the communication channel from the communication processor 31, the time slot assignment part 37 refers to the channel/time slot correspondence table so that a time slot set not assigned to another communication channel and broadcast channel is selected, and is assigned to this communication channel. When a time slot set is assigned to this communication channel, the time slot assignment part 37 presents the notification part 311 with assigned time slot set information indicating the correspondence of the assigned time slot set and the channel.

The communication processor 31 produces downlink data, and outputs this data to the transmission part 33 in association with the channel in accordance with the destination and type of the downlink data. In concrete terms, downlink user data addressed to a certain mobile station device 20 is output in association with the communication channel of the mobile station devices 20, downlink communication control data addressed to a certain mobile station device 20 is output in association with the control channel, and downlink data addressed to all of the mobile station devices 20 is output in association with the broadcast channel.

Furthermore, in cases where assigned time slot set information is input from the time slot assignment part 37, the notification part 311 produces downlink communication control data including this assigned time slot set information, and outputs this data to the transmission part 33 in association with the control channel.

The transmission part 33 transmits the downlink data output from the communication processor 31 using a time slot stored in the channel/time slot correspondence table in association with a channel corresponding to this downlink data.

The receiving part 24 receives the downlink data transmitted by the transmission part 33. Then, the receiving part 24 acquires the channel stored in association with the time slot containing the received downlink data from the assigned time slot storage part 25, and output the received downlink data to the communication processor 21 in association with the acquired channel.

The communication processor 21 performs a communication process in accordance with the channel and downlink data input from the receiving part 24. For example, in cases where assigned time slot set information is contained in the downlink data (downlink communication control data) associated with a control channel, the communication processor 21 updates the assigned time slot storage part 25 in accordance with this assigned time slot set information. In concrete terms, the communication channel and the time slots contained in the assigned time slot set information are stored in association with each other in the assigned time slot storage part 25. By referring to the assigned time slot storage part 25, the mobile station device 20 transmits the uplink data using uplink time slot assigned to the communication channel used by the mobile station devices 20.

Below, a process will be described in which broadcast channels are specified as channels that do not use uplink time slots, and the uplink time slots assigned to broadcast channels are assigned to other communication channels.

The part 39 for specifying channels that do not use uplink time slots queries the communication processor 31 as to the presence or absence of channels that do not use uplink time slots. Here, the communication processor 31 specifies a broadcast channel among those channels stored in the channel/time slot correspondence table as channels that do not use uplink time slots, and outputs channel information indicating the specified broadcast channel to the part 39 for specifying channels that do not use uplink time slots.

Here, the part 39 for specifying channels that do not use uplink time slots thus specifies the broadcast channel as channels that do not use uplink time slots on the basis of the channel information output from the communication processor 31.

The part 39 for specifying channels that do not use uplink time slots outputs channel information indicating specified channels to the time slot assignment part 37. The time slot assignment part 37 assigns the uplink time slot assigned to the channel indicated by the channel information input from the part 39 for specifying channels that do not use uplink time slots to a channel other than this channel.

This assignment process will be described in concrete terms. When channel information is input from the part 39 for specifying channels that do not use uplink time slots, the time slot assignment part 37 determines a channel to which the uplink time slot assigned to the channel indicated by the channel information is to be assigned. Here, the time slot assignment part 37 judges for each communication channel whether or not there has been a failure in the reception of the immediately preceding uplink time slot, and determines a communication channel that has failed in reception as a channel to which the uplink time slot is to be assigned. Furthermore, it would also be possible to determine a communication channel to which the same time slot set as a control channel has been assigned as a channel to which the uplink time slot is to be assigned, or to determine a communication channel of mobile station devices 20 stored as priority users (mobile station devices 20 used by fire departments or police) as a channel to which the uplink time slot is to be assigned. Furthermore, it would also be possible to determine a communication channel performing high-priority communications (e.g., streaming or the like) as a channel to which the uplink time slot is to be assigned, or to determine a communication channel judged by link adaptation to have the lowest communication rate of uplink time slots as a channel to which the uplink time slot is to be assigned.

The time slot assignment part 37 assigns the uplink time slot assigned to the channel indicated by the channel information input from the part 39 for specifying channels that do not use uplink time slots to the channel thus determined, and updates the channel/time slot correspondence table.

FIG. 5 is a diagram showing the channel/time slot correspondence table following updating. In FIG. 5, the uplink time slot 3 assigned to the broadcast channel in FIG. 4 is assigned to the communication channel 1.

Furthermore, when the uplink time slot is assigned to the communication channel, the time slot assignment part 37 outputs assigned uplink time slot information indicating the correspondence of the assigned uplink time slot and the communication channel to the notification part 311.

In cases where assigned uplink time slot information is input from the time slot assignment part 37, the notification part 311 produces use-permitted user identification information on the basis of the assigned uplink time slot information. This use-permitted user identification information is information that is used to notify the mobile station device 20 that performs communication by using the communication channel indicated by the assigned uplink time slot information of the uplink time slot indicated by the assigned uplink time slot information. Specifically, this use-permitted user identification information includes information indicating the uplink time slot and information indicating the mobile station device 20.

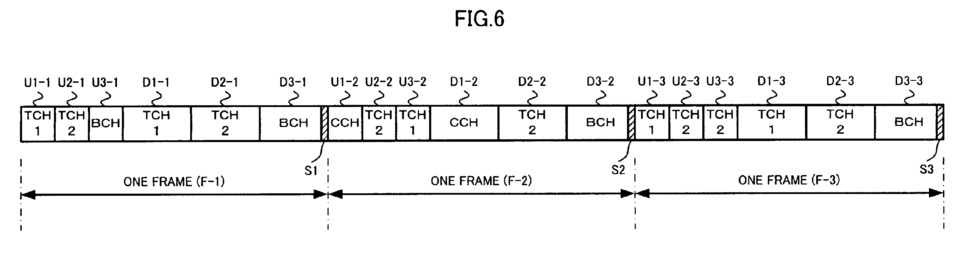

The notification part 311 includes the produced use-permitted user identification information in a portion of the downlink data transmitted over the broadcast channel. FIG. 6 is an explanatory diagram of an uplink time slot assignment and notification process. The notification part 311 in the diagram includes the use-permitted user identification information S1 in a portion of the downlink time slot D-1 to which the broadcast channel (indicated as BCH in FIG. 6) is assigned among the downlink time slots making up the frame F-1. Below, information indicating the uplink time slot U3 and information indicating the mobile station device 20 that uses the communication channel 1 (indicated as TCH1 in FIG. 6) are included in this use-permitted user identification information S1.

As a result of the abovementioned process, the downlink data including the use-permitted user identification information is input into the communication processor 21 in association with the broadcast channel. The communication processor 21 reads out the use-permitted user identification information from the input downlink data, and judges whether or not the mobile station device 20 indicated by the use-permitted user identification information is its own mobile station device 20. As a result, if the mobile station device 20 is not its own mobile station device 20, a particular processing is not performed, and if the mobile station device 20 is its own mobile station device 20, the assigned time slot storage part 25 is updated in accordance with the use-permitted user identification information. In concrete terms, the communication channel and the uplink time slot contained in the use-permitted user identification information are stored in correspondence with each other in the assigned time slot storage part 25.

The mobile station device 20 thereby transmits uplink data using an uplink time slot newly assigned by the time slot assignment part 37 together with the uplink time slot originally assigned by the time slot assignment part 37. Specifically, as described above, the transmission part 22 transmits uplink data output from the communication processor 21 using time slots stored in the assigned time slot storage part 25 in association with channels assigned to this uplink data. In this case, the transmission part 22 appropriately selects time slots containing uplink data from the uplink time slot originally assigned by the time slot assignment part 37 and uplink time slot newly assigned by the time slot assignment part 37.

In the example shown in FIG. 6, the transmission part 22 of the mobile station device 20 that uses the communication channel 1 transmits uplink data using the time slot U3 (the time slot U3-2 corresponds to this in the frame F-2) contained in the use-permitted user identification information S1 among the uplink time slots making up the frame F-2. The uplink data transmitted using the time slot U3 is processed as uplink data corresponding to the communication channel 1 as a result of the receiving part 35 making reference to the channel/time slot correspondence table in the base station device 30. Furthermore, in this example, the time slot U1-2 and time slot D1-2 are assigned to control channels; accordingly, the mobile station device 20 cannot use these slots.

Furthermore, in the example shown in FIG. 6, the use-permitted user identification information S2 is contained in a portion of the downlink time slot D3-2. This use-permitted user identification information S2 contains information that indicates the uplink time slot U3, and information indicating the mobile station device 20 that uses the communication channel 2 (noted as TCH2 in FIG. 6). The communication processor 21 of the mobile station device 20 using the communication channel 1 that receives this updates the assigned time slot storage part 25 in accordance with the use-permitted user identification information S2. In concrete terms, the communication channel and the uplink time slot contained in the use-permitted user identification information S1 that are stored in association with each other in the assigned time slot storage part 25 are deleted. Meanwhile, the mobile station device 20 using the communication channel 2 stores the communication channel and the uplink time slot contained in the use-permitted user identification information S2 in association with each other in the assigned time slot storage part 25. Thus, the communication channel using the uplink time slot corresponding to the broadcast channel is updated for each frame.

The process described above will be described in greater detail with reference to a flowchart.

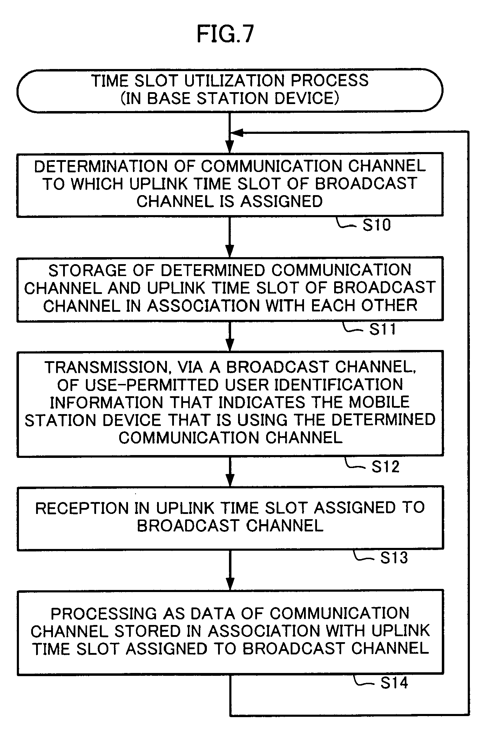

FIG. 7 is a flowchart showing a process performed by the base station device 30. As shown in this diagram, the base station device 30 first determines the communication channel to which the uplink time slot of the broadcast channel is assigned (S10), and stores the determined communication channel and the uplink time slot of the broadcast channel in association with each other in the channel/time slot correspondence table (S11). Next, the base station device 30 transmits, via the broadcast channel, use-permitted user identification information indicating the mobile station device 20 that is using the determined communication channel (S12). When the mobile station device 20 that receives this transmits the uplink data in the uplink time slot assigned to the broadcast channel, the base station device 30 receives this (S13), and refers to the channel/time slot correspondence table, so that this data is processed as the uplink data of the communication channel stored in association with the uplink time slot assigned to the broadcast channel (S14). The base station device 30 performs the above process for each frame.

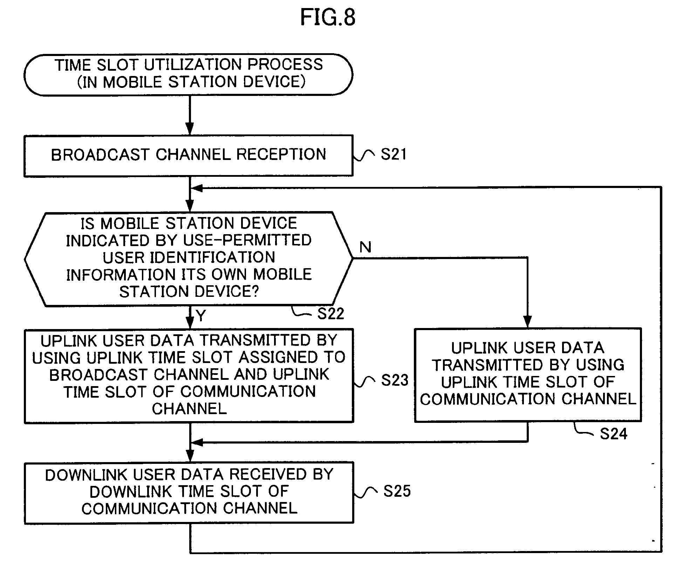

FIG. 8 is a flowchart showing a process performed by the mobile station device 20. As shown in this diagram, the mobile station device 20 first receives the broadcast channel (S21), and judges whether or not the mobile station device 20 indicated by the use-permitted user identification information that is contained in this channel is its own mobile station device 20 (S22). If the indicated mobile station device 20 is its own mobile station device 20, the uplink user data is ) transmitted in the next frame by using the uplink time slot assigned to the broadcast channel up to this point and the uplink time slot originally assigned to communication channel (S23). On the other hand, if the indicated mobile station device 20 is not its own mobile station device 20, the uplink user data is transmitted in the next frame by using only the time slot originally assigned to the communication channel (S24). Furthermore, downlink user data is received using the downlink time slot assigned to the communication channel (S25). The mobile station device 20 performs the above process for each frame.

In the mobile communication system 10, as described above, the uplink-downlink status of the respective time slots is not altered. Accordingly, effective utilization of the time slots can be realized without increasing the guard time. Furthermore, since uplink time slots and channels are stored in association with each other, uplink communication can be performed in each time slot. The mobile station device 20 is capable of new time slot assignment using a broadcast channel.

The present invention is not limited to the embodiment described above. For example, in the abovementioned embodiment, the system is arranged so that an uplink time slot assigned to a broadcast channel could be utilized in a communication channel. However, it would also be possible to devise the system so that an uplink time slot assigned to a communication channel could be utilized in another communication channel. If this is done, uplink time slots can be effectively utilized in a more flexible manner.

Furthermore, it would also be possible to devise the system so that an uplink time slot assigned to a control channel could also be utilized in another communication channel. More concretely, the system may be devised so that an uplink time slot assigned to a control channel can be utilized in a communication channel used by a mobile station device 20 transmitting a connection request by using the control channel. If this is done, the mobile station device 20 can continue to utilize the uplink time slot assigned to the control channel after the connection request have been made.

## Claims

1. A mobile communication system for performing wireless communication between a base station device and a plurality of mobile station devices by using a frame that includes a plurality of uplink time slots and a plurality of downlink time slots that correspond to these uplink time slots, wherein:
the base station device comprises time slot set assignment means for assigning, to respective channels, a time slot set constructed from the uplink time slot and the downlink time slot within the frame;
each of the mobile station devices comprises uplink data transmission means for transmitting uplink data by using the uplink time slot assigned to the channel used by the mobile station device;
the base station device further comprises means for specifying, among the one or plurality of channels to which a time slot set has been assigned by the time slot set assignment means, channels that do not use uplink time slots whereby a channel that does not use an uplink time slot is specified; and uplink time slot assigning means whereby the uplink time slot assigned to the channel specified by the means for specifying channels that do not use uplink time slots is assigned to a channel other than the specified channel; and
in a case where the uplink time slot is assigned by the uplink time slot assigning means to the channel used by the mobile station device, the uplink data transmission means of the mobile station device transmits uplink data by using the time slot assigned by the uplink time slot assigning means together with the uplink time slot assigned by the time slot set assignment means.

2. The mobile communication system according to claim 1, wherein
the base station device further comprises storage means for correlating and storing the channel to which the uplink time slot have been assigned by the uplink time slot assigning means, and the uplink time slot; and
uplink data receiving means for receiving, via the channel stored in correlation with the uplink time slot in the storage means, data transmitted in the uplink time slot by the uplink data transmission means of the mobile station device.

3. The mobile communication system according to claim 1 or claim 2, wherein
the base station device further comprises notification means whereby notification of the uplink time slot assigned to a designated channel by the uplink time slot assigning means is provided to the mobile station device that performs communication using the channel, over a broadcast channel.

4. The mobile communication system according to claim 1 or claim 2, wherein
the channel specified by the means for specifying channels that do not use uplink time slots is a broadcast channel.

5. The mobile communication system according to claim 1 or claim 2, wherein
the channel specified by the means for specifying channels that do not use uplink time slots is a control channel;
the uplink time slot assigning means assigns the uplink time slot that has been assigned to the control channel specified by the means for specifying channels that do not use uplink time slots to a channel other than the control channel; and
once a connection request has been sent to the base station device by the mobile station device via the control channel, the uplink data transmission means of the mobile station device transmits uplink data by additionally using the uplink time slot assigned to the control channel by the uplink time slot assigning means.

6. A base station device for performing wireless communication with a plurality of mobile station devices by using a frame that includes a plurality of uplink time slots and a plurality of downlink time slots that correspond to these uplink time slots, comprising:
time slot set assignment means for assigning, to respective channels, a time slot set constructed from the uplink time slot and the downlink time slot within the frame;
means for specifying, among the one or plurality of channels to which a time slot set has been assigned by the time slot set assignment means, channels that do not use uplink time slots whereby a channel that does not use an uplink time slot is specified; and
uplink time slot assigning means whereby the uplink time slot assigned to the channel specified by the means for specifying channels that do not use uplink time slots is assigned to a channel other than the specified channel.
